# EUROPEAN PATENT SPECIFICATION

(11) **EP 3 829 755 B1**
(45) Date of publication and mention of the grant of the patent: **07.01.2026**
(21) Application number: 19765801.6
(22) Date of filing: 19.07.2019
(51) Int. Cl.: B01F 21/20, B01F 25/316, B01F 35/21, B01F 35/50, C02F 1/68, C02F 5/08

(54) **DEVICE FOR DISTRIBUTING POLYPHOSPHATES FOR THE TREATMENT OF WATER IN A HEATING SYSTEM**
VORRICHTUNG ZUM VERTEILEN VON POLYPHOSPHATEN ZUR WASSERBEHANDLUNG IN EINEM HEIZSYSTEM
DISPOSITIF DE DISTRIBUTION DE POLYPHOSPHATES POUR LE TRAITEMENT DE L'EAU DANS UN SYSTÈME DE CHAUFFAGE

(30) Priority: 20.07.2018 IT 201800007402; 13.02.2019 IT 201900000521 U; 13.02.2019 IT 201900000523 U
(43) Date of publication of application: 09.06.2021
(73) Proprietor: HCE S.r.l., 25060 Cellatica (BS) (IT)
(72) Inventor: INGLESE, Enrico, 25128 Brescia (IT)
(74) Representative: De Sandre, Emanuele
(86) International application number: PCT/IB2019/056201
(87) International publication number: WO 2020/016851

(56) References cited:
- EP-A2- 0 469 407
- EP-A2- 0 469 407
- WO-A1-2005/095722
- DE-B- 1 140 178
- DE-B- 1 140 178
- FR-A1- 2 721 834
- FR-A1- 2 721 834
- IT-B- 1 248 529
- JP-A- S59 123 518
- JP-A- S59 123 518
- US-A- 2 532 973
- US-A- 2 532 973
- US-A1- 2010 187 334
- US-A1- 2010 221 404
- US-B1- 6 647 566

## Description

The present invention concerns a device for distributing polyphosphates for the treatment of water in a sanitary system.

In particular, the present invention relates especially to a distribution device which is able to promote the dissolving, in a water flow, of sodium and/or potassium polyphosphates so as to prevent and/or eliminate incrustations, typically of calcium, in a sanitary system.

The distribution device according to the present invention aims to improve the state of the art which, at present, provides a polyphosphate distributor which has a cup-shaped container suitable for storing the polyphosphates to be distributed.

A lid can be screwed onto the mouth of the cup-shaped container which is passed through by two channels - an inlet channel and an outlet channel which emerge inside the cup-shaped container so as to guide a water flow over the polyphosphates.

The lid has a connecting sleeve which is passed through by the two channels so that they can be connected to the system.

The distributor also comprises a three-way sleeve with a faucet.

The latter has two connectors which are coaxial with each other and are designed to be connected to a piping of the system in which the distributor is installed and a third connector designed to be connected to the connecting sleeve of the lid.

The three-way sleeve, in turn, has four channels, a first channel and a second channel of which pass through the third connector so that, when the latter is connected to the connecting sleeve of the lid, the inlet and outlet channels are respectively aligned with the first and second channels of the three-way sleeve.

The said sleeve also has a third and fourth channel which respectively pass through the first and second connectors.

The four channels emerge inside a central seat engaged by the operating member of the faucet which, in the open position, connects together the first and third channels and the second and fourth channels so that a water flow entering the third channel would flow through the cup-shaped container passing over the polyphosphates before flowing out of the distribution device through the fourth channel.

In a faucet by-pass position, the third and fourth channels are connected directly together so that there is no flow through the cup-shaped container and the latter may be opened in order to replenish the stored amount of polyphosphates, without causing any water loss from the system.

The faucet also has a closed configuration in which the fluid flow between the third and fourth channels is prevented, both along the by-pass and across the cup-shaped container.

A conventional distribution device of the type briefly illustrated above is described more fully in Italian patent IT1248529.

This conventional solution is particularly bulky and not easy to install, in particular because it must be inserted along a straight section of the system and because it requires a free space, transverse to the system line, to which the distributor must be connected.

Moreover, the cup-shaped container, or cup, is normally made of transparent material such that the inside of the chamber containing the salts, and any use of the salts, is visible. However, use of the salts is not immediately obvious since the salts do not have a marked colouring inside the cup.

In the present text, the term "salts" is used an alternative to and with a meaning equivalent to that of the term "polyphosphates".

The problem of indicating the amount of salts used in salt dispersion or distribution systems is, however, particularly important. For example, US 4702270 describes a salt dispersion device for swimming pools. Such a dispersion device has an indicator which indicates the amount of salt which has been used inside the device.

EP2081662 describes instead a filtering system which has an indicator signalling the state of permeability of the filter so as to signal any blockage thereof.

Despite the fact that this problem has been identified in other sectors, the dispensers which are currently used in hydraulic heating systems do not have, however, a specific indicator which allows an immediate and obvious indication of the residual amount of salts left inside the cup chamber.

The only indication is that provided generally by a rubber bellows which extends inside the chamber and is used to convey the water flow. The fully extended state of the bellows downwards provides a rough indication that the salts contained inside the cup have been nearly used up.

US 6 647 566 B1 discloses a distribution device suitable for polyphosphate according to the preamble of claim 1.

The problem underlying the present invention is that of providing a device for distributing polyphosphates which is able to overcome the drawbacks mentioned above.

The main task of the present invention is therefore that of solving the aforementioned problem.

In connection with this task an object of the present invention is to propose a polyphosphate distribution device which is more compact than the conventionally known devices.

Another object of the present invention consists in providing a polyphosphate distribution device which offers a greater flexibility with regard to installation.

A further object of the present invention is that of providing a polyphosphate distribution device which is simpler to use compared to a polyphosphate distribution device of the conventional type.

Another object of the present invention is to provide a salt dispenser for hydraulic systems which is structurally and functionally designed to overcome all the drawbacks mentioned with reference to the cited prior art. This task as well as these and other objects which will appear more clearly below are achieved with a polyphosphate distribution device according to the attached claim 1.

Detailed characteristic features of a polyphosphate distribution device according to the invention are indicated in the dependent claims.

Further characteristic features and advantages of the invention will emerge more clearly from the description of a preferred, but not exclusive embodiment of a polyphosphate distribution device according to the invention, illustrated in a mode of implementation thereof shown by way of a non-limiting example in the attached sets of drawings in which:

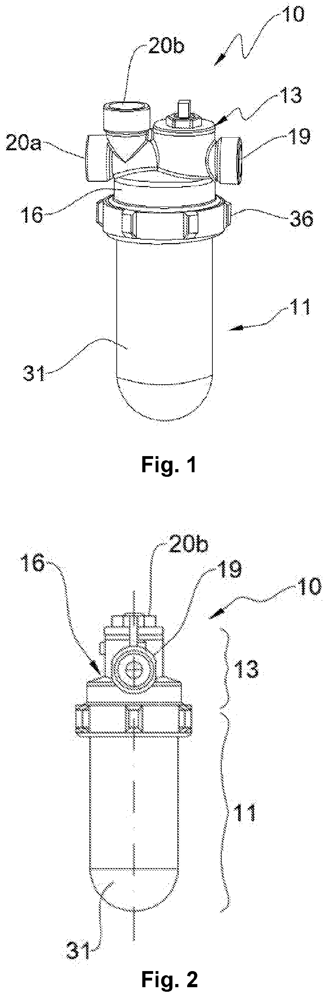

- Figure 1 shows a perspective view of a polyphosphate distribution device according to the present invention;
- Figure 2 shows a side view of the polyphosphate device according to Figure 1;

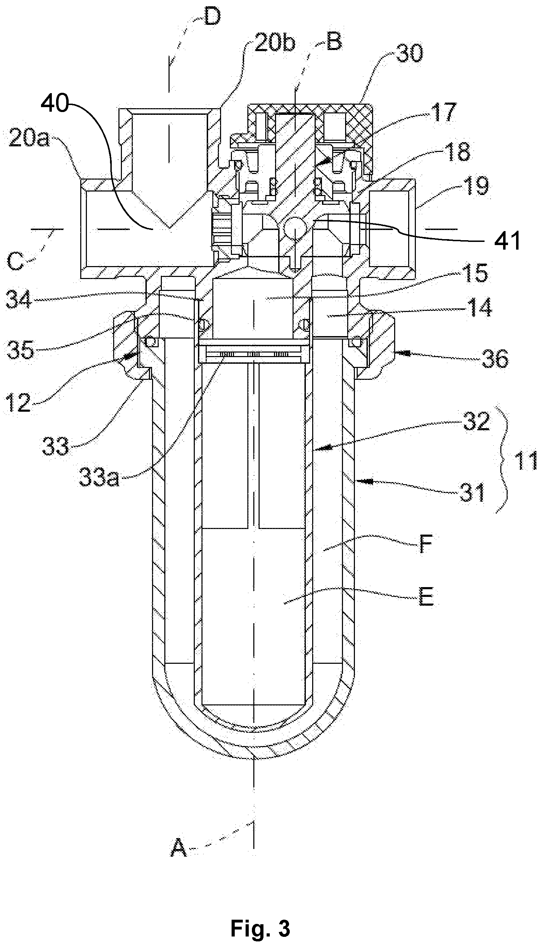

- Figure 3 shows a cross-section, along the plane III-III of Figure 2, of the polyphosphate distribution device according to the preceding figures;

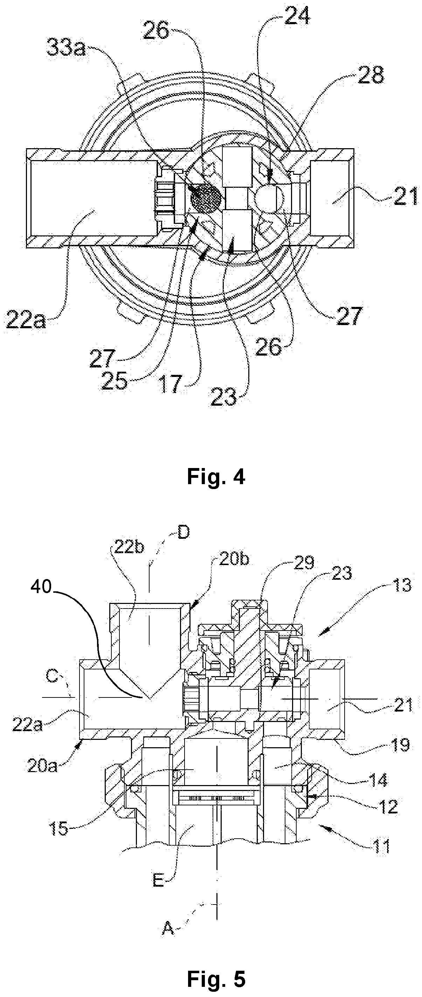

- Figure 4 shows a cross-section, along the plane IV-IV of Figure 3, of the polyphosphate distribution device according to the preceding figures;
- Figure 5 shows a cross-section, similar to that of Figure 4, of the polyphosphate distribution device according to the preceding figures, in a by-pass configuration;

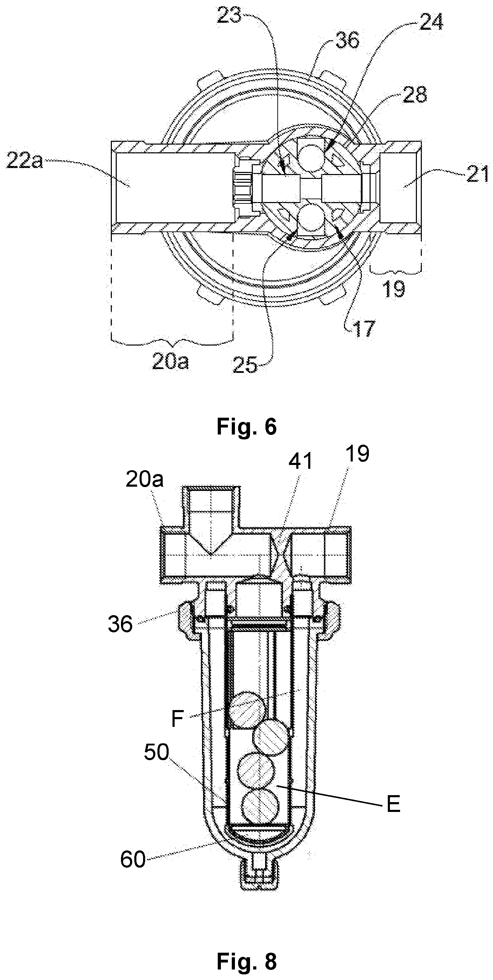

- Figure 6 shows a cross-section, along the plane VI-VI of Figure 5, of the polyphosphate distribution device according to Figure 5;

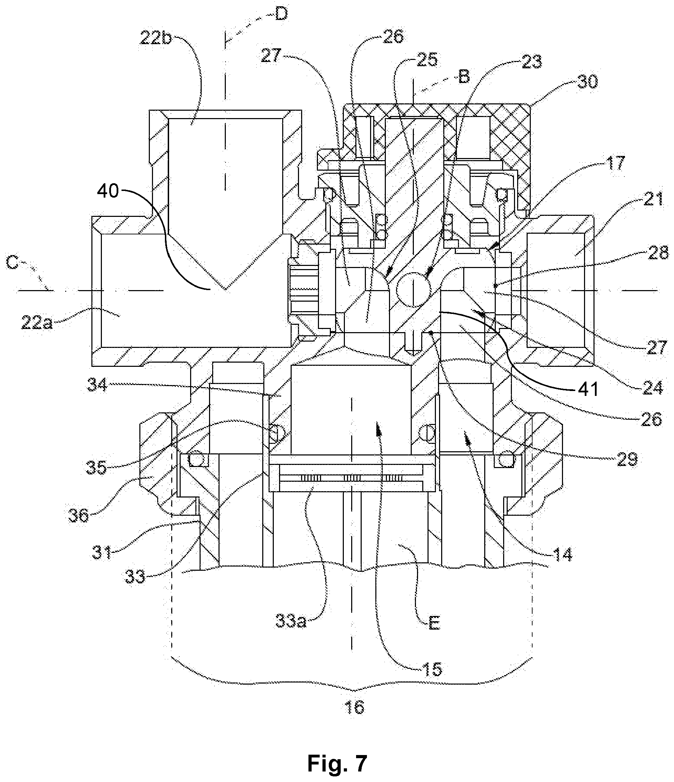

- Figure 7 shows an enlarged view of a detail of Figure 3;
- Figure 8 shows a longitudinally sectioned view of the polyphosphate distribution device according to Figure 1 in the condition where it is completely filled with polyphosphates.

With particular reference to the said figures, 10 denotes in its entirety a polyphosphate distribution device, or salt dispenser, which in a manner conventional per se preferably comprises:
- a tank 11 for polyphosphates, which extends along a direction of extension A from an open end 12 thereof;
- a distribution member 13 which can be removably connected to the open end 12 of the tank 11 and is provided with an inlet channel 14, configured to direct fluid towards polyphosphates contained inside the tank 11, and an outlet channel 15, configured to receive fluid which has passed through the tank 11 and flowed over the polyphosphates.

The term "polyphosphates" or "salts" in the present text is understood as meaning a material comprising preferably sodium and/or potassium salts or other material suitable for being combined with the calcium carbonate in order to prevent or remove internal incrustations along the pipes of a hydraulic system.

Advantageously, the polyphosphates used for implementation of the present invention are formed by granules or balls so that all of them may be passed through by a water flow where the contact surface area is optimized.

A particular feature of the polyphosphate distribution device or dispenser 10 for hydraulic systems consists in the fact that it may comprise a distribution head or member 13 provided with unions or connectors 19, 20a, 20b for connection to the system and a containing chamber or tank 11, as explained more fully in the Italian application No. 202019000000523 in the name of the same Applicant, the text of which is cited herein for reference purposes.

The tank may be sealingly connected to the distribution member 13 and defines an internal cavity E designed to contain polyphosphates to be distributed.

The distribution head or member 13 may comprise a first and second union or connector 20a, 19 which extend in a direction substantially perpendicular to a main axis A of the distribution device 10, defined by the tank 11, and a third connector 20b parallel to the main axis A and axially offset with respect thereto.

Preferably, the distribution device 10 is arranged on the intake section of a hydraulic system forming a closed circuit, such as the circuit of a hot-water heating system.

More specifically, the distribution device 10 may comprise a distribution member 13, or head, provided with connectors 19, 20a, 20b, or unions, which are for example threaded or flanged for in-line connection of the distribution device 10, or dispenser, in the hydraulic system.

In particular, if A identifies the main axis of extension of the distribution device or dispenser 10, a first connector and second connector 20a, 19, or unions, extend in a direction substantially perpendicular to the aforementioned axis A, while a third connector 20b, or union, is essentially parallel to the axis A. However, the third connector 20b is axially offset with respect to the axis A, with a substantially asymmetrical configuration.

Preferably, the first and second connectors 20a, 19 are aligned along the same axis.

In the present text the terms "dispenser", "cup", "head", "salt containing chamber" and "union(s)" are used interchangeably with and with the same meaning as the respective terms "distribution device", "tank", "distribution member", "containing member" and "connector(s)".

According to a further aspect, the first and third connectors 20a, 20b may converge inside a joining duct 40 which extends inside the distribution member 13.

The joining duct 40 and the second connector 19 may be distinguished as being the supply duct and delivery duct, respectively, or vice versa, depending on the mode of installation of the distribution device 10.

The joining duct 40 and the second connector 19 may be separated by a baffle 41 which deflects the flow circulating through the distribution member 13 from the supply duct to the delivery duct towards a tank 11 which is at least partially transparent.

In some embodiments, the baffle 41 may be formed by a by-pass valve or valve member 17 able to connect the joining duct 40 to the second connector 19 without the liquid entering into the tank 11.

Preferably, said by-pass valve is located in a position diametrically opposite to the third connector 20b, relative to the main axis A.

The valve member 17 may be for example formed by a rotating valve provided with a through-hole which is aligned with the connectors 19 and 20a when the valve is rotated through 90°, such that the two connectors are in direct communication with each other.

Owing to this characteristic feature it is possible to remove the tank in order to replace the polyphosphates without having to interrupt the liquid flow.

Baffle 41 and second connector 20a may be advantageously located in diametrically opposite positions with respect to the axis A. A particular feature of the distribution device 10 is that the distribution member 13 advantageously comprises an operating body 16 comprising a valve member 17 which occupies an operating space 18, an inlet connector 19 and at least one outlet connector 20a, 20b.

The inlet connector 19 and the at least one outlet connector 20a, 20b have passing through them, respectively, an intake channel 21 and a discharge channel 22a, 22b which communicate with the operating space 18.

The distribution member 13 is advantageously configured so that the operating body 16 is substantially completely contained within the projection of the volume of the tank 11 along the direction of extension A.

In other words, the distribution member 13 is configured so that none of it projects, in any direction radial to the direction of extension A, beyond the projection of the tank along said direction of extension.

In this way it is possible to install easily a distribution device according to the present invention in a hydraulic system, also in positions which do not specifically correspond to the seat for installation of the said distribution device 10.

The valve member 17 is rotatable inside the operating body 16 about an axis of rotation B between at least one open configuration and at least one by-pass configuration.

Owing to the aforementioned configuration, the valve member may be easily operated on both sides of the distribution device such that the latter is particularly flexible in terms of installation and use.

The valve body 17 has advantageously passing through it:
- a first channel 23 which is configured so as to connect directly the intake channel 21 to the discharge channel 22a or 22b, following positioning of the valve member 17 in said by-pass configuration;
- a second channel 24 and a third channel 25 which are configured to connect, respectively, the intake channel 21 to the inlet channel 14 and the outlet channel 15 to the discharge channel 20a or 22b, or vice versa, following positioning of the valve member 17 in the open configuration.

The axis of rotation B preferably is substantially parallel to the direction of extension A.

Advantageously, in order to allow connection to a hydraulic system in different configurations, the distribution device 10 comprises a first outlet connector 20a passed through by a first discharge channel 22a and a second outlet connector 20 passed through by a second discharge channel 22b.

The first outlet connector 20a and the second outlet connector 20b advantageously extend respectively in different and, preferably perpendicular, connection directions C, D so as to connect the distribution device 10 to a hydraulic system selectively at the first outlet connector 20a or the second outlet connector 20b.

In this way it is possible to obtain an in-line or elbow connection of the distribution device 10 to the hydraulic system.

In a preferred, but not exclusive embodiment, the connection direction C of the first outlet connector 20a is transverse, and preferably perpendicular, to the direction of extension A and the connection direction D of the second outlet connector 20b is substantially parallel to the direction of extension A.

Advantageously, the second channel 24 and the third channel 25 are symmetrical with each other relative to the axis of rotation B and the first channel 23 extends symmetrically with respect to the axis of rotation B.

In this way, the second channel 24 and the third channel 25 are functionally interchangeable, thus ensuring simpler manufacture and assembly of the distribution device 10.

In greater detail, the second channel 24 and the third channel 25 preferably have:
- a first path 26, oriented parallel to the direction of extension A, so as to establish connection, selectively, with the inlet channel 14 or the outlet channel 15;
- a second path 27, oriented perpendicularly with respect to the direction of extension A, so as to establish connection, selectively, with the intake channel 21 or with the discharge channel 22a or 22b;
- a curved section for connecting said first path 26 to said second path 27.

In this way, the second channel 24 and the third channel 25, in a basically interchangeable manner, deviate the flow received, during use, from the intake channel 21, in a direction substantially perpendicular to the direction of extension A so as to direct it, parallel to the latter, into the tank where the flow passes over the polyphosphates and is then re-directed perpendicularly to the direction of extension A, towards one of the discharge channels 22a or 22b.

Advantageously, the valve member 17 has:
- a cylindrical wall 28, which is coaxial with the axis of rotation B and through which the second paths 27 of the second channel 24 and the third channel 25 emerge;
- a base wall 29, which is perpendicular to the axis of rotation B and through which the first paths of the second channel 24 and the third channel 25 emerge.

In this way, the valve member 17 does not have a preferred mounting direction.

Thus the valve member 17 may be assembled in the operating body 16 without having to specifically arrange either the second channel 24 or the third channel 25 so that they face the intake channel 21 or the discharge channel 22a, 22b.

This thus simplifies the construction of the distribution device 10 and avoids the risk of incorrect orientation of the valve member 17 inside the operating body 16, during assembly thereof.

The operating body 16 advantageously comprises an elongated actuating element 30 fixed to the valve member 17 for rotating it manually about the axis of rotation B.

The operating body 16 is preferably configured so that the valve member 17 is rotatable in an alternative and equivalent manner in a clockwise or anti-clockwise direction about the axis of rotation B so as to switch the valve member 17 between the open configuration and the by-pass configuration or vice versa.

Thus, switching of the valve member 17 may be performed by rotating the latter equally well in one direction or the other without the risk of incorrect operation of the distribution device 10.

Advantageously, the tank 11 comprises a cup-shaped shell 31 and a containing member 32 provided with an internal cavity E designed to contain polyphosphates, and with a water-permeable wall which delimits the internal cavity E.

The containing member 32 advantageously extends along the direction of extension A from a connecting end 33 which is removably connected to the operating body 16 so as to place the internal cavity E in communication with the outlet channel 15.

In particular, according to one aspect of the present disclosure, the joining duct 40 opens out inside a central duct which extends inside said tank. Preferably, said central duct corresponds to said containing member 32, in particular to the internal cavity E, which extends inside said tank 11. Preferably, moreover, a container 50, preferably tubular in shape, which contains the salts to be dispensed, is fitted onto said central duct, in particular onto the containing member 32.

Preferably, the connecting end 33 is provided with a water-permeable, for example mesh-type, closure 33a, so as to delimit at the top the internal cavity E and prevent the solid polyphosphates from escaping therefrom.

The cup-shaped shell 31 is configured to define, in cooperation with the water-permeable wall of the containing member 32 an interspace F situated outside the containing member 32.

In the present text, the containing member 32, and more specifically its internal cavity E, and the interspace F may be equivalently identified as being "coaxial ducts", for supply and delivery, respectively, or vice versa. In particular, the containing member 32, and more specifically its internal cavity E, and the interspace F may be equivalently identified as being the central duct and peripheral duct, respectively.

The tank 11 is preferably configured so that, after fixing thereof to the distribution member 13, the inlet channel 14 is in communication with the interspace F.

A particular feature of the distribution device 10 consists in the fact that the inlet connector may open out into a peripheral duct coaxial with respect to said central duct. Preferably, said peripheral duct corresponds to the interspace F which is coaxial with the containing member 52 and the internal cavity E.

According to one aspect of the present disclosure, the flow through the tank 11 may be supplied by two coaxial ducts, i.e. the containing member 32, in particular the internal cavity E of the latter, and the interspace F, which also form respectively the (central) supply duct and the (peripheral) delivery duct, or vice versa, and are connected to the distribution member 13 upstream and downstream of the baffle 41 so that the water enters into the centre of the tank 11 via the supply containing member 32, which is therefore connected to the joining duct 40, and exits therefrom towards the connector 19 via the delivery interspace F or vice versa, depending on how the distribution device 10 is installed.

According to one aspect of the present disclosure, the containing member 32, and in particular the internal cavity E, may also contain a floating indicator 60 which is subject to displacement inside the containing member 32, or chamber, so as to follow the free volume thereof as the solid phosphates contained therein are dissolved by the water flow.

A particular feature of the polyphosphate distribution device 10 for hydraulic systems consists in the fact that advantageously it contains a distribution member 13 provided with connectors 19, 20a, 20b for connection to the system and a tank 11 sealingly connected to the distribution member 11 and defining a chamber or member 32 for the polyphosphates to be dispensed.

The distribution member 13 with the tank 11 defines a hydraulic path including said containing member 32, where said containing member 32 includes at least one transparent portion through which the contents of the containing member 32 are visible.

The distribution device may comprise, in said containing member 32, an indicator 60 for indicating that said polyphosphates have been used up, said indicator being subject to displacement inside the containing member 32 when said polyphosphates are used, as explained more clearly in Italian patent application No. 202019000000521 in the name of the same Applicant, the text of which is cited herein for reference purposes.

More specifically, according to this aspect, a tubular container 50 which contains the polyphosphates to be dispensed may be fitted on the containing member 32 and is such that the polyphosphates are passed through by the water flow inside the container 11, being partially dissolved.

According to one aspect of the present invention, said indicator may be of the floating type.

In particular, the container 50 may contain a floating indicator 60 which is subject to displacement inside the containing member 32 so as to follow the free volume thereof as the solid polyphosphates contained therein are dissolved by the water flow.

According to a further aspect of the present invention, said indicator 60 may instead be of the sinking type.

More specifically, according to this aspect, it is envisaged that the indicator 60 is of the sinking type, for example with a density greater than that of the fluid in which the polyphosphates are dispensed, being arranged above the said polyphosphates and tending to sink towards the bottom of the tank 11 as the polyphosphates which have been introduced are dissolved. The principle is therefore the exact opposite to that of the preceding system.

The indicator 60 is guided inside the container 50, or inside the containing member 32, should this container 50 not be provided, so as to rise up towards the distribution member 13 as the salts are dissolved by the water flow and has preferably a semi-ogival form with the pointed part towards the bottom and a side directed towards the distribution member 13. The residual amount of salts present inside the containing member of the tank 11 is indicated by the position of the indicator with respect to the tank 11, as explained more fully in Italian patent application N. 202019000000521 in the name of the same Applicant, the text of which is cited herein for reference purposes.

The indicator 60 is preferably coloured with bright colours so as to facilitate identification thereof inside the containing member 32 so that it is possible to determine the amount of polyphosphates which have been used. These polyphosphates may be immersed inside the containing member 32 or container 50 in loose form, as granules or pre-packaged with a preferred shape suitable for the container 50.

The cup-shaped shell 31 advantageously has a substantially cylindrical and/or conical side wall, the axis of symmetry of which preferably defines the direction of extension A.

In order to optimize in a fluid dynamic manner the distribution device 10, the containing member 32 advantageously is substantially cylindrical or generally axial symmetrical and advantageously coaxial with the cup-shaped shell 31.

The operating body 16 has a collar 34 which extend substantially coaxial with the direction of extension A so as to define a mouth of the outlet channel 15.

The connecting end 33 of the containing member 32 is preferably shaped so as to match the collar 34 and engage with the latter in a removable manner.

Advantageously, the collar 34 is cylindrical and can be inserted inside the connecting end 33, preferably by means of a form fit, advantageously with interference.

A first seal 35 is provided between the collar 34 and the connecting end 33 so as to ensure a sealing action between the connecting end 33 and the containing member 32, at least one of these being provided with a cavity which partially seats the seal 35, which is preferably an O-ring.

Advantageously, the cup, or rather, the cup-shaped shell 31, can be fixed to the head and more specifically to the operating body 16 by means of a ring nut 36 which engages with a flange projecting radially from the cup-shaped shell and which can be screwed onto a thread of the operating body 16.

Advantageously, in order to ensure the fluid-tightness, a second seal is provided between the cup-shaped shell 31 and the operating body 16. From a functional point of view, the distribution device may be filled with polyphosphates by separating the cup-shaped shell 31 from the operating body so as to access the containing member 32 which, once separated from the collar 34, may be filled as required with polyphosphates.

The containing member 32 may then be connected again together with the operating body 16 to which cup-shaped shell 31 is also fixed.

According to one aspect, the polyphosphates may also comprise in the package the container 50 and/or the indicator 60 so that, after unscrewing the ring nut 36 and removing the cup-shaped shell 31, a salt refill cartridge including the container 50 and if necessary also the indicator 60 may be replaced in the dispenser according to the invention.

During use, once the container 50 has been replenished with polyphosphates, the latter are crossed by the fluid with which the hydraulic system is filled whenever a new refill operation is performed. In this way the fluid conveys in a solution a desired amount of polyphosphates.

As the polyphosphates are used up, being converted into solution in the supply fluid of the hydraulic system, the indicator is made to move upwards towards the distribution member 13, if of the floating type, or to move downwards towards the bottom of the tank 11, if of the sinking type, until it reaches a position which indicates that all the polyphosphates have been used up. In this case, the ring nut 36 is unscrewed and the tank 11 removed so that the container 50 can be refilled with polyphosphates or so that said container 50 may be replaced with a pre-filled replacement cartridge.

In order to install a distribution device according to the present invention, it is sufficient to connect the inlet connector 19 and one of the outlet connectors 20a and 20b to respective pipes, depending on the particular configuration required.

Clearly either one of the outlet connectors 20a or 20b which is not connected to a pipe will be advantageously closed by means of a sealing cap.

Once it has been installed, with the valve member 17 in the open configuration, the distribution device may be passed through by the water flowing through the pipes of the system so that the water passes over the polyphosphates.

When the polyphosphates have been used up, namely when they have been completely dissolved and there is not a sufficient amount inside the tank 11 for operation, the tank may be replenished with polyphosphates using the procedure described briefly above until the containing member 32 is filled with polyphosphates.

Clearly, in order to prevent water losses from the system, before removing the cup-shaped shell 31 from the operating body 16, the valve member 17 may be rotated by the operator into the by-pass configuration which prevents fluid passing (via the second channel 24 or the third channel 25) towards the tank 11.

In this way the tank 11 may be opened, replenished with polyphosphates and closed again before switching again the valve member 17 into the open configuration for forcing the fluid to pass through the tank and flow over the polyphosphates contained therein.

It has therefore been shown how the polyphosphate distribution device according to the present invention fulfils the task and achieves the predefined objects.

In particular, a polyphosphate distribution device which is much less bulky than conventional distribution devices and which also offers a high degree of flexibility in terms of installation and use is provided.

A polyphosphate distribution device according to the present invention is therefore more compact than the conventionally known devices and is simpler to use, allowing operation of the valve member in an equivalent manner on both sides thereof.

The distribution device 10, according to the invention, has been described in possible operating conditions where it receives a fluid flow, from a system in which it has been incorporated, via the inlet connector 19 and releases it into the system via the outlet connectors 20a or 20b.

However, it should be pointed out that the distribution device 10 according to the present invention, is entirely reversible, namely may be incorporated in a system so as to receive fluid from an outlet connector 20a or 20b and release it into the system via the inlet connector 19.

Thus, in general, the expressions used in the present text and suggesting a direction of flow through the distribution device 10 are to be understood in the sense that said direction is to be regarded as relating to one possible or preferred use, which is not exclusive and in any case does not limit the scope of protection defined by the claims which follow.

## Claims

1. Polyphosphate distribution device (10) comprising:
- a tank (11) for polyphosphates, which extends along a direction of extension (A) from an open end (12) thereof;
- a distribution member (13) which can be removably engaged with the open end (12) of said tank (11) and is provided with an inlet channel (14) and an outlet channel (15);
said distribution member (13) comprising an operating body (16) comprising a valve member (17), an inlet connector (19) and at least one outlet connector (20a, 20b);
said inlet connector (19) and outlet connector (20a, 20b) having, passing through them, an intake channel (21) and a discharge channel (22a, 22b), respectively;
**characterized in that**:
- said distribution member (13) is configured so that said operating body (16) is substantially completely contained within the projection of the volume of said tank (11) along said direction of extension (A);
- said valve member (17) is rotatable inside said operating body (16) about an axis of rotation (B) between at least one open configuration and at least one by-pass configuration;
said valve member (17) being passed through by:
- a first channel (23) which is configured so as to connect directly said intake channel (21) to said discharge channel (22a or 22b), following positioning of said valve member (17) in said by-pass configuration;
- a second channel (24) and a third channel (25) which are configured to connect, respectively, said intake channel (21) to said inlet channel (14) and said outlet channel (15) to said discharge channel (22a, 22b), or vice versa, following positioning of said valve member (17) in said open configuration,
**characterized in that** said distribution device (10) comprises a first connector and a second connector of said outlet connectors (20a, 20b), each of which is passed through, respectively, by a first discharge channel (22a) and by a second discharge channel (22b) which extend along connection directions (C, D) which are different and preferably perpendicular, so as to connect said distribution device (10) to a hydraulic system selectively at said first outlet connector (20a) and said second outlet connector (20b).

2. Polyphosphate distribution device (10) according to claim 1, wherein said axis of rotation (B) is substantially parallel to said direction of extension (A).

3. Polyphosphate distribution device (10) according to any one of the preceding claims, wherein the connection direction (C) of said first outlet connector (20a) is transverse, and preferably perpendicular, to said direction of extension (A) and the connection direction (D) of said second outlet connector (20b) is substantially parallel to said direction of extension (A).

4. Polyphosphate distribution device (10) according to one of the preceding claims, wherein said second channel (24) and said third channel (25) are symmetrical with each relative to said axis of rotation (B); said first channel (23) being symmetrical with respect to said axis of rotation (B).

5. Polyphosphate distribution device (10) according to one of the preceding claims, wherein said second channel (24) and said third channel (25) have:
- a first path (26), oriented parallel to said direction of extension so as to establish connection, selectively, with said inlet channel (14) or with said outlet channel (15);
- a second path (27), oriented perpendicularly with respect to said direction of extension so as to establish connection, selectively, with said intake channel (21) or with said discharge channel (22a, 22b);
- a curved section for connecting said first path (26) to said second path (27).

6. Polyphosphate distribution device (10) according to claim 5, wherein said valve member (17) has:
- a cylindrical wall (28), which is coaxial with said axis of rotation (B) and through which the second paths (27) of said second channel (24) and said third channel (25) emerge;
- a base wall (29), which is perpendicular to said axis of rotation (B) and through which the first paths of said second channel (24) and said third channel (25) emerge.

7. Polyphosphate distribution device (10) according to one of the preceding claims, wherein said operating body (16) comprises an elongated actuating element (30) fixed to said valve body (17) for rotating it manually about said axis of rotation (B); the operating body (16) being configured so that said valve member (17) is rotatable in an alternative and equivalent manner in a clockwise or anti-clockwise direction about said axis of rotation (B) so as to switch said valve member (17) from said open configuration to said by-pass configuration or from said by-pass configuration to said open configuration.

8. Polyphosphate distribution device (10) according to one of the preceding claims, wherein said tank (11) comprises a cup-shaped shell (31) and a containing member (32) provided with an internal cavity (E) designed to contain polyphosphates, and with a water-permeable wall; said containing member (32) extending along said direction of extension from a connecting end (33) which is removably connected to said operating body (16) so as to place said internal cavity (E) in communication with said outlet channel (15); said cup-shaped shell (31) being configured to define, in cooperation with the permeable wall of said containing member (32), an interspace (F) on the outside of said containing member (32); said tank (11) being configured so that, following fixing thereof to said distribution member (1), said inlet channel (14) is in communication with said interspace (F).

9. Polyphosphate distribution device (10) according to claim 8, wherein said operating body (16) has a collar (34) which extends substantially coaxially with respect to the direction of extension so as to define a mouth of said outlet channel (15); the connecting end (33) of said containing member (32) being shaped so as to match said collar (34) and engage with the latter in a removable manner.

## Patentansprüche

1. Polyphosphat-Verteilervorrichtung (10) umfassend:
- einen Tank (11) für Polyphosphate, der sich von einem offenen Ende (12) davon in eine Erstreckungsrichtung (A) erstreckt;
- ein Verteilerelement (13), das abnehmbar mit dem offenen Ende (12) des Tanks (11) in Eingriff gebracht werden kann und mit einem Einlasskanal (14) und einem Auslasskanal (15) versehen ist;
wobei das Verteilerelement (13) einen Betriebskörper (16) umfasst, der ein Ventilelement (17), einen Einlassanschluss (19) und mindestens einen Auslassanschluss (20a, 20b) umfasst;
wobei der Einlassanschluss (19) und der Auslassanschluss (20a, 20b) einen durch dieselben verlaufenden Aufnahmekanal (21) bzw. Abgabekanal (22a, 22b) umfassen;
**dadurch gekennzeichnet, dass:**
- das Verteilerelement (13) so konfiguriert ist, dass der Betriebskörper (16) im Wesentlichen vollständig innerhalb der Projektion des Volumens des Tanks (11) entlang der Erstreckungsrichtung (A) enthalten ist;
- wobei das Ventilelement (17) innerhalb des Betriebskörpers (16) um eine Rotationsachse (B) zwischen mindestens einer offenen Konfiguration und mindestens einer Bypass-Konfiguration drehbar ist;
wobei das Ventilelement (17) durchquert wird von:
- einem ersten Kanal (23), der so konfiguriert ist, dass er den Aufnahmekanal (21) direkt mit dem Abgabekanal (22a oder 22b) verbindet, nachdem das Ventilelement (17) in der Bypass-Konfiguration positioniert wurde;
- einem zweiten Kanal (24) und einem dritten Kanal (25), die so konfiguriert sind, dass sie jeweils den Aufnahmekanal (21) mit dem Einlasskanal (14) und den Auslasskanal (15) mit dem Abgabekanal (22a, 22b) verbinden, oder umgekehrt, nachdem das Ventilelement (17) in die offene Konfiguration positioniert wurde,
**dadurch gekennzeichnet, dass** die Verteilervorrichtung (10) einen ersten Anschluss und einen zweiten Anschluss der Auslassanschlüsse (20a, 20b) umfasst, die jeweils von einem ersten Abgabekanal (22a) und einem zweiten Abgabekanal (22b) durchquert werden, die sich in unterschiedlichen und vorzugsweise senkrechten Verbindungsrichtungen (C, D) erstrecken, um die Verteilervorrichtung (10) wahlweise am ersten Auslassanschluss (20a) oder am zweiten Auslassanschluss (20b) mit einem Hydrauliksystem zu verbinden.

2. Polyphosphat-Verteilervorrichtung (10) nach Anspruch 1, wobei die Rotationsachse (B) im Wesentlichen parallel zur Erstreckungsrichtung (A) verläuft.

3. Polyphosphat-Verteilervorrichtung (10) nach einem der vorhergehenden Ansprüche, wobei die Verbindungsrichtung (C) des ersten Auslassanschlusses (20a) quer und vorzugsweise senkrecht zur Erstreckungsrichtung (A) verläuft und die Verbindungsrichtung (D) des zweiten Auslassanschlusses (20b) im Wesentlichen parallel zur Erstreckungsrichtung (A) verläuft.

4. Polyphosphat-Verteilervorrichtung (10) nach einem der vorhergehenden Ansprüche, wobei der zweite Kanal (24) und der dritte Kanal (25) jeweils symmetrisch relativ zur Rotationsachse (B) sind; wobei der erste Kanal (23) symmetrisch in Bezug auf die Rotationsachse (B) ist.

5. Polyphosphat-Verteilervorrichtung (10) nach einem der vorhergehenden Ansprüche, wobei der zweite Kanal (24) und der dritte Kanal (25) Folgendes aufweisen:
- einen ersten Pfad (26), der parallel zur Erstreckungsrichtung ausgerichtet ist, um wahlweise eine Verbindung mit dem Einlasskanal (14) oder mit dem Auslasskanal (15) herzustellen;
- einen zweiten Pfad (27), der senkrecht in Bezug auf die Erstreckungsrichtung ausgerichtet ist, um wahlweise eine Verbindung mit dem Aufnahmekanal (21) oder mit dem Abgabekanal (22a, 22b) herzustellen;
- einen gekrümmten Abschnitt zum Verbinden des ersten Pfades (26) mit dem zweiten Pfad (27).

6. Polyphosphat-Verteilervorrichtung (10) nach Anspruch 5, wobei das Ventilelement (17) Folgendes aufweist:
- eine zylindrische Wand (28), die koaxial zur Rotationsachse (B) verläuft und durch die die zweiten Pfade (27) des zweiten Kanals (24) und des dritten Kanals (25) austreten;
- eine Basiswand (29), die senkrecht zur Rotationsachse (B) ist und durch die die ersten Pfade des zweiten Kanals (24) und des dritten Kanals (25) austreten.

7. Polyphosphat-Verteilervorrichtung (10) nach einem der vorhergehenden Ansprüche, wobei der Betriebskörper (16) ein längliches Betätigungselement (30) umfasst, das an dem Ventilkörper (17) befestigt ist, um diesen manuell um die Rotationsachse (B) zu drehen; wobei der Betriebskörper (16) so konfiguriert ist, dass das Ventilelement (17) abwechselnd und gleichwertig im Uhrzeigersinn oder gegen den Uhrzeigersinn um die Rotationsachse (B) gedreht werden kann, um das Ventilelement (17) von der offenen Konfiguration in die Bypass-Konfiguration oder von der Bypass-Konfiguration in die offene Konfiguration umzustellen.

8. Polyphosphat-Verteilervorrichtung (10) nach einem der vorhergehenden Ansprüche, wobei der Tank (11) eine becherförmige Hülle (31) und ein Aufnahmeelement (32) umfasst, das mit einem inneren Hohlraum (E), der dazu gestaltet ist, Polyphosphate zu enthalten, und mit einer wasserdurchlässigen Wand versehen ist; wobei sich das Aufnahmeelement (32) in der Erstreckungsrichtung von einem Anschlussende (33) erstreckt, das trennbar mit dem Betriebskörper (16) verbunden ist, um den Innenraum (E) mit dem Auslasskanal (15) in Verbindung zu bringen; wobei die becherförmige Hülle (31) so konfiguriert ist, dass sie zusammen mit der durchlässigen Wand des Aufnahmeelements (32) einen Zwischenraum (F) an der Außenseite des Aufnahmeelements (32) definiert; wobei der Tank (11) so konfiguriert ist, dass nach der Befestigung davon an dem Verteilerelement (1) der Einlasskanal (14) mit dem Zwischenraum (F) in Verbindung steht.

9. Polyphosphat-Verteilervorrichtung (10) nach Anspruch 8, wobei der Betriebskörper (16) einen Kragen (34) aufweist, der sich im Wesentlichen koaxial in Bezug auf die Erstreckungsrichtung erstreckt, um eine Öffnung des Auslasskanals (15) zu definieren; wobei das Anschlussende (33) des Aufnahmeelements (32) so geformt ist, dass es zu dem Kragen (34) passt und mit diesem auf trennbare Weise in Eingriff treten kann.

## Revendications

1. Dispositif de distribution de polyphosphate (10) comprenant :
- un réservoir (11) pour polyphosphates, qui s'étend le long d'une direction d'extension (A) à partir d'une extrémité ouverte (12) de celui-ci ;
- un élément de distribution (13) qui peut être en prise de manière amovible avec l'extrémité ouverte (12) dudit réservoir (11) et qui est doté d'un canal d'entrée (14) et d'un canal de sortie (15) ;
ledit élément de distribution (13) comprend un corps de commande (16) comprenant un élément de soupape (17), un raccord d'entrée (19) et au moins un raccord de sortie (20a, 20b) ;
ledit raccord d'entrée (19) et ledit raccord de sortie (20a, 20b) étant traversés par un canal d'admission (21) et un canal d'évacuation (22a, 22b), respectivement;
**caractérisé en ce que** :
- ledit élément de distribution (13) est conçu de sorte que ledit corps de commande (16) est sensiblement entièrement contenu au sein de la projection du volume dudit réservoir (11) le long de ladite direction d'extension (A) ;
- ledit élément de soupape (17) peut être amené à tourner à l'intérieur dudit corps de commande (16) autour d'un axe de rotation (B) entre au moins une configuration ouverte et au moins une configuration de dérivation ;
ledit élément de soupape (17) étant traversé par :
- un premier canal (23) qui est conçu de manière à raccorder directement ledit canal d'admission (21) audit canal d'évacuation (22a ou 22b), à la suite du positionnement dudit élément de soupape (17) dans ladite configuration de dérivation ;
- un deuxième canal (24) et un troisième canal (25) qui sont conçus pour raccorder, respectivement, ledit canal d'admission (21) audit canal d'entrée (14) et ledit canal de sortie (15) audit canal d'évacuation (22a, 22b), ou inversement, à la suite du positionnement dudit élément de soupape (17) dans ladite configuration ouverte,
**caractérisé en ce que** ledit dispositif de distribution (10) comprend un premier raccord et un second raccord desdits raccords de sortie (20a, 20b), chacun étant traversé, respectivement, par un premier canal d'évacuation (22a) et par un second canal d'évacuation (22b) qui s'étendent le long de directions de raccordement (C, D) qui sont différentes et de préférence perpendiculaires, de manière à raccorder ledit dispositif de distribution (10) à un système hydraulique sélectivement au niveau dudit premier raccord de sortie (20a) et dudit second raccord de sortie (20b).

2. Dispositif de distribution de polyphosphate (10) selon la revendication 1, dans lequel ledit axe de rotation (B) est sensiblement parallèle à ladite direction d'extension (A).

3. Dispositif de distribution de polyphosphate (10) selon l'une quelconque des revendications précédentes, dans lequel la direction de raccordement (C) dudit premier raccord de sortie (20a) est transversale, et de préférence perpendiculaire, à ladite direction d'extension (A) et la direction de raccordement (D) dudit second raccord de sortie (20b) est sensiblement parallèle à ladite direction d'extension (A).

4. Dispositif de distribution de polyphosphate (10) selon l'une des revendications précédentes, dans lequel ledit deuxième canal (24) et ledit troisième canal (25) sont symétriques l'un par rapport à l'autre par rapport audit axe de rotation (B) ; ledit premier canal (23) étant symétrique par rapport audit axe de rotation (B).

5. Dispositif de distribution de polyphosphate (10) selon l'une des revendications précédentes, dans lequel ledit deuxième canal (24) et ledit troisième canal (25) ont :
- un premier chemin (26), orienté parallèlement à ladite direction d'extension de manière à établir un raccordement, sélectivement, avec ledit canal d'entrée (14) ou avec ledit canal de sortie (15) ;
- un second chemin (27), orienté perpendiculairement à ladite direction d'extension de manière à établir un raccordement, sélectivement, avec ledit canal d'admission (21) ou avec ledit canal d'évacuation (22a, 22b) ;
- une section incurvée permettant de raccorder ledit premier chemin (26) audit second chemin (27).

6. Dispositif de distribution de polyphosphate (10) selon la revendication 5, dans lequel ledit élément de soupape (17) a :
- une paroi cylindrique (28), qui est coaxiale avec ledit axe de rotation (B) et à travers laquelle débouchent les seconds chemins (27) dudit deuxième canal (24) et dudit troisième canal (25) ;
- une paroi de base (29), qui est perpendiculaire audit axe de rotation (B) et à travers laquelle débouchent les premiers chemins dudit deuxième canal (24) et dudit troisième canal (25).

7. Dispositif de distribution de polyphosphate (10) selon l'une des revendications précédentes, dans lequel ledit corps de commande (16) comprend un élément d'actionnement allongé (30) fixé audit corps de soupape (17) permettant de le faire tourner manuellement autour dudit axe de rotation (B) ; le corps de commande (16) étant configuré de sorte que ledit élément de soupape (17) peut être amené à tourner de manière alternative et équivalente dans le sens des aiguilles d'une montre ou dans le sens inverse des aiguilles d'une montre autour dudit axe de rotation (B) de manière à faire passer ledit élément de soupape (17) de ladite configuration ouverte à ladite configuration de dérivation ou de ladite configuration de dérivation à ladite configuration ouverte.

8. Dispositif de distribution de polyphosphate (10) selon l'une des revendications précédentes, dans lequel ledit réservoir (11) comprend une coque en forme de coupelle (31) et un élément conteneur (32) doté d'une cavité interne (E) destinée à contenir des polyphosphates, et d'une paroi perméable à l'eau ; ledit élément conteneur (32) s'étend le long de ladite direction d'extension à partir d'une extrémité de raccordement (33) qui est raccordée de manière amovible audit corps de commande (16) de manière à mettre ladite cavité interne (E) en communication avec ledit canal de sortie (15) ; ladite coquille en forme de coupelle (31) étant conçue pour définir, en coopération avec la paroi perméable dudit élément conteneur (32), un espace intermédiaire (F) à l'extérieur dudit élément conteneur (32) ; ledit réservoir (11) étant conçu de telle sorte que, à la suite à sa fixation sur ledit élément de distribution (1), ledit canal d'entrée (14) est en communication avec ledit espace intermédiaire (F).

9. Dispositif de distribution de polyphosphate (10) selon la revendication 8, dans lequel ledit corps de commande (16) a un collet (34) qui s'étend sensiblement coaxialement par rapport à la direction d'extension de manière à définir une embouchure dudit canal de sortie (15) ; l'extrémité de raccordement (33) de l'élément conteneur (32) étant formée de manière à s'adapter audit collet (34) et à venir en prise avec ce dernier de manière amovible.
